# FASCICULE DE BREVET EUROPEEN

(11) **EP 2 994 746 B1**
(45) Date de publication et mention de la délivrance du brevet: **26.06.2019**
(21) Numéro de dépôt: 14727886.5
(22) Date de dépôt: 06.05.2014
(51) Int. Cl.: G01N 27/90

(54) **TETE DE CONTROLE D'UN CAPTEUR DE CONTROLE NON DESTRUCTIF PAR COURANTS DE FOUCAULT ET CAPTEUR COMPORTANT UNE TELLE TETE DE CONTROLE**
PRÜFKOPF EINES ZERSTÖRUNGSFREIEN WIRBELSTROMPRÜFSENSORS UND SENSOR MIT SOLCH EINEM PRÜFKOPF
INSPECTION HEAD OF AN EDDY CURRENT NON-DESTRUCTIVE TESTING SENSOR AND SENSOR COMPRISING SUCH AN INSPECTION HEAD

(30) Priorité: 10.05.2013 FR 1354218
(43) Date de publication de la demande: 16.03.2016
(73) Titulaire: Commissariat à l'Énergie Atomique et aux Énergies Alternatives, 75015 Paris (FR)
(72) Inventeur: DECITRE, Jean-Marc, F-91460 Marcoussis (FR)
(74) Mandataire: Bonnet, Michel
(86) Numéro de dépôt international: PCT/FR2014/051060
(87) Numéro de publication internationale: WO 2014/181061

(56) Documents cités:
- EP-A1- 2 037 261
- WO-A1-2008/015195
- WO-A1-2010/115963
- US-A- 3 875 502
- US-A- 5 659 248
- US-A1- 2005 007 108
- US-A1- 2012 019 236

## Description

La présente invention concerne une tête de contrôle d'un capteur de contrôle non destructif par courants de Foucault et un capteur comportant une telle tête de contrôle.

Un capteur de contrôle non destructif de ce type utilise la propriété électromagnétique des courants de Foucault pour la détection de défauts tels que des entailles, fissures ou corrosions dans des structures conductrices de faible épaisseur, pas nécessairement planes, telles que des pièces métalliques aéronautiques ou nucléaires. Par exemple, cette technologie permet l'inspection de tubes de générateurs de vapeur dans des centrales nucléaires.

Une tête de contrôle d'un tel capteur comporte généralement au moins un circuit à fonction d'émission alimenté en courant alternatif pour engendrer un champ électromagnétique local et au moins un récepteur sensible à ce champ électromagnétique. Le récepteur électromagnétique est souvent constitué d'une bobine réceptrice aux bornes de laquelle une force électromotrice de même fréquence que celle du courant alternatif d'alimentation est induite. Plus précisément, lorsque la tête de contrôle du capteur de contrôle non destructif à courants de Foucault est disposée au voisinage d'une pièce à inspecter, le circuit émetteur est alimenté en signal sinusoïdal. Un champ électromagnétique de même fréquence est alors émis dans l'air et dans la pièce à inspecter. Il en résulte, aux bornes de la bobine réceptrice, une force électromotrice induite provenant, d'une part, du couplage entre le circuit émetteur et la bobine réceptrice (ce couplage étant modifié en présence de la pièce) et, d'autre part, du champ magnétique rayonné par les courants induits dans la pièce et qui traduit l'éventuelle présence d'un défaut dans cette dernière. La portion de force électromotrice induite provenant du champ magnétique rayonné par la présence de l'éventuel défaut constitue le signal utile de la force électromotrice induite totale.

L'invention s'applique plus particulièrement à une tête de contrôle d'un capteur de contrôle non destructif par courants de Foucault à fonctions séparées d'émission et réception, c'est-à-dire une tête de contrôle comportant un support sur lequel est disposé au moins un élément d'émission/réception, chaque élément d'émission/réception comportant :
- un circuit émetteur d'un champ électromagnétique local par circulation d'un courant alternatif prédéterminé dans ce circuit, et
- un récepteur électromagnétique sensible au champ électromagnétique localement émis,
ce circuit émetteur et ce récepteur électromagnétique étant des dispositifs séparés.

Dans le cas d'une tête de contrôle à un seul élément d'émission/réception, il est nécessaire de déplacer le capteur selon deux axes principaux pour obtenir la cartographie bidimensionnelle d'une zone à inspecter d'une structure conductrice. Ce déplacement devant en outre présenter une certaine précision, il nécessite un banc mécanique coûteux capable de renseigner la position courante selon les deux axes de déplacement. Dans ces conditions, l'inspection de la structure conductrice est non seulement complexe mais en outre très lente.

Il est donc avantageux de multiplier les éléments d'émission/réception selon une ou plusieurs directions sur le support de la tête de contrôle de manière à limiter un tel déplacement du capteur. Mais, d'une façon générale, un élément d'émission/réception de capteur de contrôle non destructif par courants de Foucault présente un encombrement largement supérieur à la surface de la zone qu'il peut inspecter dans la structure conductrice. Ce que l'on peut qualifier de « surface utile » de l'élément est alors limité. Un espacement minimal entre éléments d'émission/réception doit en outre parfois être respecté selon la forme des éléments pour assurer un bon fonctionnement de l'ensemble et détecter tous les défauts. Ainsi, il n'est pas simple de disposer les éléments d'émission/réception sur le support de manière à permettre une inspection sans zone d'ombre de la structure conductrice. Par exemple, dans un mode de réalisation de la demande de brevet internationale WO 2012/018541 A1 illustré en figure 7 de ce document, plusieurs éléments d'émission/réception à bobines d'émission et bobines de réception séparées sont alignés en barrette unidimensionnelle et connectés en série pour permettre plusieurs contrôles de zones simultanés dans une dimension. Mais dans cette configuration, il n'est pas possible d'obtenir la détection d'un élément indépendamment des autres puisque les bobines d'émission et de réception sont mises en série de la même façon. En outre, les éléments sont distants les uns des autres de sorte qu'ils ne permettent pas d'inspecter sans déplacement toute la zone couverte par la barrette. Ainsi, non seulement un déplacement de la barrette selon un axe orthogonal à son axe principal est nécessaire, mais également un déplacement le long de son axe principal pour couvrir les zones d'ombre.

Une solution est proposée dans le brevet publié sous le numéro FR 2 904 693 B1. Cette solution consiste à disposer plusieurs lignes d'éléments d'émission/réception en une même barrette de contrôle unidimensionnelle, chaque ligne à partir de la deuxième étant décalée de la précédente de manière à disposer les éléments d'émission/réception en quinconce. Cette disposition en quinconce compense la faible surface utile des éléments et permet un recouvrement total dans l'axe principal de la barrette lorsque celle-ci est uniquement déplacée orthogonalement à cet axe principal. Un codeur mécanique peut alors être utilisé pour décaler automatiquement les lignes entre elles lors de l'affichage de la zone balayée par le capteur et compenser ainsi l'effet de la mise en quinconce des éléments sur le support. Le déplacement de la tête de contrôle est donc limité mais pas supprimé.

Une autre solution, proposée dans le brevet publié sous le numéro US 5,659,248, consiste à disposer les éléments d'émission/réception en plusieurs couches de matrices de ces éléments, ceux-ci étant disposés en quinconce d'une couche à l'autre, de nouveau pour compenser leur faible surface utile. Cette configuration tridimensionnelle supprime toute zone d'ombre sans nécessiter aucun déplacement de la tête de contrôle du capteur, mais au prix d'une certaine complexité puisqu'il faut prévoir plusieurs couches de matrices superposées d'éléments d'émission/réception. En outre, du fait que tous les éléments ne se trouvent pas à la même distance de la surface à inspecter, les corrections à prévoir pour compenser les différences d'entrefer d'une couche à l'autre compliquent singulièrement le traitement des données.

Un autre exemple est décrit dans WO2010/115963 A1 avec des récepteurs magnétique disposé sous des nappes conductrices, la surface utile ne correspondant pas aux dimensions des nappes.

Il peut ainsi être souhaité de prévoir une tête de contrôle d'un capteur de contrôle non destructif par courants de Foucault qui permette de s'affranchir d'au moins une partie des problèmes et contraintes précités.

Il est donc proposé une tête de contrôle d'un capteur de contrôle non destructif par courants de Foucault à fonctions séparées d'émission et réception selon la revendication 1. Des modifications optionnelles sont définie dans les revendications dépendantes.

L'invention sera mieux comprise à l'aide de la description qui va suivre, donnée uniquement à titre d'exemple et faite en se référant aux dessins annexés dans lesquels :
- la figure 1 représente schématiquement la structure générale d'un capteur de contrôle non destructif par courants de Foucault, selon un mode de réalisation de l'invention,
- la figure 2 représente schématiquement et en vue de dessus la structure générale d'une tête de contrôle du capteur de la figure 1, selon un mode mode de réalisation de l'invention,
- les figures 3A, 3B et 3C représentent schématiquement et en vue de dessus des détails de la tête de contrôle de la figure 2,
- les figures 4, 5 et 6 représentent schématiquement, en perspective pour les figures 4 et 5, en vue de dessus pour la figure 6, différentes variantes de réalisation d'un élément d'émission/réception de la tête de contrôle de la figure 2,
- la figure 7 représente schématiquement une première variante de réalisation de la tête de contrôle de la figure 2, et
- les figures 8A et 8B représentent schématiquement un détail d'une deuxième variante de réalisation de la tête de contrôle de la figure 2.

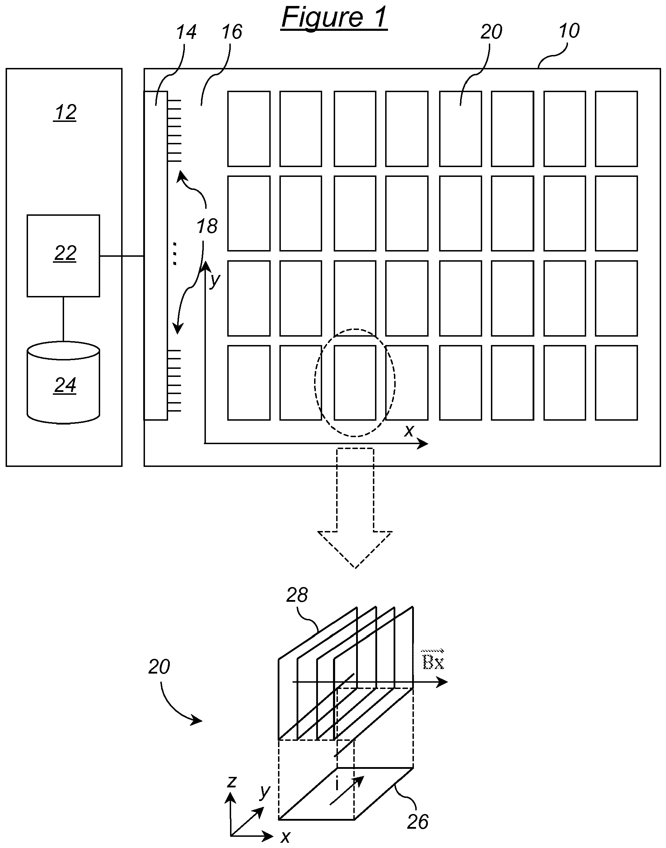

Le capteur de contrôle non destructif par courants de Foucault schématiquement représenté sur la figure 1 comporte une tête de contrôle 10, un module de traitement 12 à modulation/démodulation de données à destination et en provenance de la tête de contrôle 10 et un connecteur 14, disposé sur un support 16 de la tête de contrôle 10. Le connecteur 14 relie électriquement des pistes de connexions 18 du support 16 au module de traitement 12.

La tête de contrôle 10 comporte plusieurs éléments d'émission/réception 20 répartis sur le support 16 et reliés aux pistes de connexions 18. Dans l'exemple de la figure 1, ces éléments 20 sont répartis en matrice selon deux axes principaux orthogonaux x (axe des lignes) et y (axe des colonnes) de manière à former une matrice de quatre lignes et huit colonnes.

Le module de traitement 12 tel que représenté schématiquement sur la figure 1 comporte une unité de traitement 22 associée de façon classique à une mémoire 24 (par exemple une mémoire RAM) et apte à engendrer et traiter des données à destination ou en provenance des éléments d'émission/réception 20, ces données étant transmises via le connecteur 14.

L'unité de traitement 22 peut par exemple être mise en oeuvre dans un dispositif informatique tel qu'un ordinateur classique comportant un processeur associé à une ou plusieurs mémoires pour le stockage de fichiers de données et de programmes d'ordinateurs. L'unité de traitement 22 peut alors elle-même être considérée comme formée d'un processeur associé à une mémoire de stockage des instructions qu'il exécute sous forme de programmes d'ordinateurs. Ces programmes d'ordinateurs, ou fonctions d'un même programme d'ordinateur, sont aptes à moduler et éventuellement multiplexer des signaux de commande destinés à contrôler les fonctions d'émission de champs électromagnétiques des éléments 20 de façon indépendante et synchronisée. Ils sont également aptes à éventuellement démultiplexer, mais au moins à démoduler et traiter des signaux de détection issus des fonctions de réception de courants de Foucault induits des éléments 20 de façon également indépendante et synchronisée. Ils pourraient aussi être au moins en partie micro programmés ou micro câblés dans des circuits intégrés dédiés. Ainsi, en variante, le dispositif informatique mettant en oeuvre l'unité de traitement 22 pourrait être remplacé par un dispositif électronique composé uniquement de circuits numériques (sans programme d'ordinateur) pour la réalisation des mêmes actions. La fonction de multiplexage/démultiplexage est optionnelle dans le module de traitement 12 parce que les éléments d'émission/réception 20 peuvent être topologiquement organisés de manière à pouvoir être sollicités/interrogés les uns indépendamment des autres sans nécessiter de multiplexage. Le fonctionnement de l'unité de traitement 22 est bien connu de l'homme du métier et ne sera pas davantage détaillé.

Le support 16 est avantageusement un support souple permettant à la matrice d'éléments d'émission/réception 20 de s'adapter au relief de la surface régulière de toute structure conductrice destinée à être inspectée par le capteur de contrôle non destructif par courants de Foucault de la figure 1. Il peut comporter plusieurs couches de film souple de polyimide, par exemple du Kapton (marque déposée), sur ou à travers lesquelles sont disposés les éléments constitutifs des éléments d'émission/réception 20 et des pistes de connexions 18. Ainsi, la tête de contrôle 10 est flexible et assure un entrefer constant (i.e. distance entre la surface inspectée et les éléments d'émission/réception 20).

Chaque élément d'émission/réception 20 disposé sur le support 16 de la tête de contrôle 10 est à fonctions séparées d'émission et de réception. Il comporte pour cela :
- un circuit 26 émetteur d'un champ électromagnétique local B̅ par circulation d'un courant alternatif i prédéterminé dans ce circuit, et
- un récepteur électromagnétique 28 sensible au champ électromagnétique B̅ localement émis.

Plus précisément, le circuit émetteur 26 est une portion de nappe conductrice s'étendant sur une couche du support 16 selon une direction principale prédéterminée de circulation du courant alternatif i. Cette direction principale prédéterminée est celle de l'axe y des huit colonnes dans l'exemple illustré. Plus précisément également et de façon optionnelle, la portion de nappe conductrice 26 est de surface rectangulaire orientée selon les directions des deux axes x et y.

Le récepteur électromagnétique 28 est par exemple une bobine réceptrice disposée en vis-à-vis de la portion de nappe conductrice 26 par rapport à un axe normal à la couche du support 16 sur laquelle s'étend cette portion de nappe 26. Cet axe normal est donc l'axe z orthogonal à x et y. La bobine réceptrice 28 est par ailleurs constituée d'un certain nombre de spires enroulées autour d'un axe de détection électromagnétique parallèle à l'axe x, c'est-à-dire orthogonal à l'axe normal z et à l'axe y de la direction principale prédéterminée de circulation du courant alternatif i dans la portion de nappe conductrice 26. Compte tenu de sa disposition autour de l'axe x, la bobine réceptrice 28 ne peut pas être disposée sur une seule couche du support 16, mais sur au moins deux couches distinctes et dans son épaisseur. Dans cette épaisseur, elle peut être disposée au-dessus, en dessous ou de part et d'autre de la nappe conductrice 26. Elle est sensible à une composante B̅*x* du champ électromagnétique homogène localement émis.

Il résulte de cette configuration que l'élément d'émission/réception 20 de la figure 1 est à forte surface utile contrairement aux éléments d'émission/réception généralement connus, en raison de l'unipolarité du signal de détection de défauts qu'il fournit. Plus précisément, on montre expérimentalement que la réponse fournie par la bobine réceptrice 28 de tout élément d'émission/réception à une excitation de la portion de nappe conductrice correspondante 26 présente les caractéristiques suivantes :
- son unipolarité conduit à une forme de signal non nulle sur toute l'étendue d'un défaut,
- elle peut être négative, mais seulement sur une zone très limitée, ce qui évite l'annulation potentielle de réponse lorsque deux défauts sont voisins et détectables par plusieurs éléments d'émission/réception voisins,
- sa forme se rapproche de celle de la fonction porte sur l'ensemble de la surface de l'élément d'émission/réception et présente même un net palier de faible ondulation pour des défauts de longueur supérieure à un certain seuil,
- elle est d'amplitude constante quelle que soit la longueur du défaut.

On notera en outre que la projection orthogonale de la bobine réceptrice 28 dans le plan (x,y) présente un encombrement correspondant à la surface rectangulaire de la portion de nappe conductrice 26 en la recouvrant. Plus précisément, la bobine réceptrice 28 est constituée de spires rectangulaires sur une longueur, selon l'axe y, égale à la dimension selon le même axe de la portion de nappe conductrice 26 et sur une largeur, selon l'axe x, égale à la dimension selon le même axe de la portion de nappe conductrice 26. Ainsi, l'encombrement de l'élément d'émission/réception 20 correspond précisément à sa surface utile et il est possible d'en disposer plusieurs de ce type, côte à côte, très près les uns des autres et en matrice, pour constituer la tête de contrôle 10. Le capteur de contrôle non destructif par courants de Foucault de la figure 1 est ainsi particulièrement adapté pour l'inspection statique de zones bidimensionnelles de structures conductrices, ces zones bidimensionnelles étant de mêmes dimensions que la matrice des éléments d'émission/réception 20. La souplesse du support 16 permet en outre de s'adapter à des surfaces réglées présentant un certain relief.

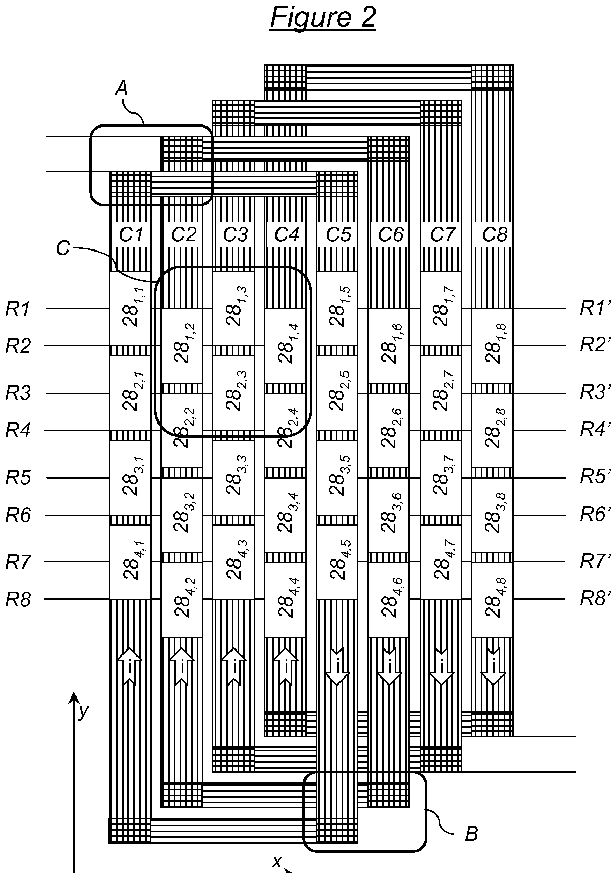

La structure plus précise de la tête de contrôle 10, schématiquement représentée sur la figure 1, va maintenant être détaillée en référence à la figure 2.

Selon le mode de réalisation illustré sur cette figure, les éléments d'émission/réception 20 sont alignés quatre par quatre selon l'axe y des colonnes de la matrice qu'ils constituent. Ils sont en outre disposés en quinconce huit par huit avec un pas de deux selon l'axe x des lignes de la matrice. La disposition en quinconce est choisie pour éviter les zones d'ombre, mais n'est pas indispensable. En outre, les portions de nappes d'une même colonne de la matrice d'éléments d'émission/réception 20 sont reliées en série entre elles de manière à ne former qu'une seule nappe conductrice formant une colonne matricielle en vis-à-vis de laquelle sont disposées plusieurs bobines réceptrices.

Plus précisément, quatre portions de nappes sont reliées en série pour former une unique nappe conductrice C1 formant la première colonne de la matrice parallèlement à l'axe y. Sur cette première colonne sont disposées quatre bobines réceptrices 28_{1,1}, 28_{2,1}, 28_{3,1} et 28_{4,1} d'axes de détection parallèles à l'axe x. Quatre autres portions de nappes sont reliées en série pour former une unique nappe conductrice C2 formant la deuxième colonne de la matrice parallèlement à l'axe y. Sur cette deuxième colonne sont disposées quatre bobines réceptrices 28_{1,2}, 28_{2,2}, 28_{3,2} et 28_{4,2} d'axes de détection parallèles à l'axe x, en quinconce par rapport aux bobines réceptrices 28_{1,1}, 28_{2,1}, 28_{3,1} et 28_{4,1}. Quatre autres portions de nappes sont reliées en série pour former une unique nappe conductrice C3 formant la troisième colonne de la matrice parallèlement à l'axe y. Sur cette troisième colonne sont disposées quatre bobines réceptrices 28_{1,3}, 28_{2,3}, 28_{3,3} et 28_{4,3} d'axes de détection parallèles à l'axe x, en quinconce par rapport aux bobines réceptrices 28₁,₂, 28_{2,2}, 28_{3,2} et 28_{4,2} de manière à se retrouver alignées selon l'axe x avec les bobines réceptrices 28_{1,1}, 28_{2,1}, 28_{3,1} et 28_{4,1}. Quatre autres portions de nappes sont reliées en série pour former une unique nappe conductrice C4 formant la quatrième colonne de la matrice parallèlement à l'axe y. Sur cette quatrième colonne sont disposées quatre bobines réceptrices 28_{1,4}, 28_{2,4}, 28_{3,4} et 28_{4,4} d'axes de détection parallèles à l'axe x, en quinconce par rapport aux bobines réceptrices 28_{1,3}, 28_{2,3}, 28_{3,3} et 28_{4,3} de manière à se retrouver alignées selon l'axe x avec les bobines réceptrices 28₁,₂, 28_{2,2}, 28_{3,2} et 28_{4,2}. Quatre autres portions de nappes sont reliées en série pour former une unique nappe conductrice C5 formant la cinquième colonne de la matrice parallèlement à l'axe y. Sur cette cinquième colonne sont disposées quatre bobines réceptrices 28_{1,5}, 28_{2,5}, 28_{3,5} et 28_{4,5} d'axes de détection parallèles à l'axe x, en quinconce par rapport aux bobines réceptrices 28_{1,4}, 28_{2,4}, 28_{3,4} et 28_{4,4} de manière à se retrouver alignées selon l'axe x avec les bobines réceptrices 28_{1,3}, 28_{2,3}, 28_{3,3} et 28_{4,3}. Quatre autres portions de nappes sont reliées en série pour former une unique nappe conductrice C6 formant la sixième colonne de la matrice parallèlement à l'axe y. Sur cette sixième colonne sont disposées quatre bobines réceptrices 28_{1,6}, 28_{2,6}, 28_{3,6} et 28_{4,6} d'axes de détection parallèles à l'axe x, en quinconce par rapport aux bobines réceptrices 28_{1,5}, 28_{2,5}, 28_{3,5} et 28_{4,5} de manière à se retrouver alignées selon l'axe x avec les bobines réceptrices 28_{1,4}, 28_{2,4}, 28_{3,4} et 28_{4,4}. Quatre autres portions de nappes sont reliées en série pour former une unique nappe conductrice C7 formant la septième colonne de la matrice parallèlement à l'axe y. Sur cette septième colonne sont disposées quatre bobines réceptrices 28_{1,7}, 28_{2,7}, 28_{3,7} et 28_{4,7} d'axes de détection parallèles à l'axe x, en quinconce par rapport aux bobines réceptrices 28_{1,6}, 28_{2,6}, 28_{3,6} et 28_{4,6} de manière à se retrouver alignées selon l'axe x avec les bobines réceptrices 28_{1,5}, 28_{2,5}, 28_{3,5} et 28_{4,5}. Enfin, quatre dernières portions de nappes sont reliées en série pour former une unique nappe conductrice C8 formant la huitième et dernière colonne de la matrice parallèlement à l'axe y. Sur cette huitième colonne sont disposées quatre bobines réceptrices 28_{1,8}, 28_{2,8}, 28_{3,8} et 28_{4,8} d'axes de détection parallèles à l'axe x, en quinconce par rapport aux bobines réceptrices 28_{1,7}, 28_{2,7}, 28_{3,7} et 28_{4,7} de manière à se retrouver alignées selon l'axe x avec les bobines réceptrices 28_{1,6}, 28_{2,6}, 28_{3,6} et 28_{4,6}.

En résumé, la matrice d'éléments d'émission/réception 20 est constituée de huit colonnes, formées par huit nappes conductrices C1 à C8 parallèles entre elles, équidistantes, proches les unes des autres et destinées à être traversées par un courant i de direction selon l'axe y, et de quatre lignes, dans chacune desquelles sont disposées en quinconce, en vis-à-vis des huit nappes conductrices selon l'axe z, huit bobines réceptrices d'axes de détection orientés selon l'axe x, de manière à former trente-deux éléments d'émission/réception 20.

De plus, les bobines réceptrices sont reliées en série deux à deux, avantageusement selon l'axe x, pour réduire autant que possible le nombre de fils d'alimentation. Cette mise en série se fait avec un pas de deux pour éviter tout couplage entre nappes conductrices et bobines réceptrices voisines.

Ainsi, sur la première ligne de la matrice :
- les bobines réceptrices 28_{1,1} et 28_{1,3} sont reliées en série à une sortie d'acquisition R1 à gauche de la matrice,
- les bobines réceptrices 28_{1,5} et 28_{1,7} sont reliées en série à une sortie d'acquisition R1' à droite de la matrice,
- les bobines réceptrices 28_{1,2} et 28_{1,4} sont reliées en série à une sortie d'acquisition R2 à gauche de la matrice, et
- les bobines réceptrices 28_{1,6} et 28_{1,8} sont reliées en série à une sortie d'acquisition R2' à droite de la matrice.

Sur la deuxième ligne de la matrice :
- les bobines réceptrices 28_{2,1} et 28_{2,3} sont reliées en série à une sortie d'acquisition R3 à gauche de la matrice,
- les bobines réceptrices 28_{2,5} et 28_{2,7} sont reliées en série à une sortie d'acquisition R3' à droite de la matrice,
- les bobines réceptrices 28_{2,2} et 28_{2,4} sont reliées en série à une sortie d'acquisition R4 à gauche de la matrice, et
- les bobines réceptrices 28_{2,6} et 28_{2,8} sont reliées en série à une sortie d'acquisition R4' à droite de la matrice.

Sur la troisième ligne de la matrice :
- les bobines réceptrices 28_{3,1} et 28_{3,3} sont reliées en série à une sortie d'acquisition R5 à gauche de la matrice,
- les bobines réceptrices 28_{3,5} et 28_{3,7} sont reliées en série à une sortie d'acquisition R5' à droite de la matrice,
- les bobines réceptrices 28_{3,2} et 28_{3,4} sont reliées en série à une sortie d'acquisition R6 à gauche de la matrice, et
- les bobines réceptrices 28_{3,6} et 28_{3,8} sont reliées en série à une sortie d'acquisition R6' à droite de la matrice.

Sur la quatrième ligne de la matrice :
- les bobines réceptrices 28_{4,1} et 28_{4,3} sont reliées en série à une sortie d'acquisition R7 à gauche de la matrice,
- les bobines réceptrices 28_{4,5} et 28_{4,7} sont reliées en série à une sortie d'acquisition R7' à droite de la matrice,
- les bobines réceptrices 28_{4,2} et 28_{4,4} sont reliées en série à une sortie d'acquisition R8 à gauche de la matrice, et
- les bobines réceptrices 28_{4,6} et 28_{4,8} sont reliées en série à une sortie d'acquisition R8' à droite de la matrice.

En outre, les nappes conductrices C1 à C8 sont toutes constituées de plusieurs fils conducteurs d'un même courant i disposés en parallèle selon l'axe y et sont reliées deux à deux en quatre bobines émettrices rectangulaires, deux nappes conductrices reliées entre elles étant espacées d'au moins une autre nappe conductrice pour éviter tout couplage entre nappes conductrices voisines. Dans le plan de la figure 2, les nappes conductrices reliées entre elles sont espacées de trois autres nappes conductrices. Plus précisément, les nappes C1 et C5 sont reliées entre elles et alimentées électriquement (en courant i) en haut à gauche de la matrice, les nappes C2 et C6 sont reliées entre elles et alimentées électriquement (en courant i) en haut à gauche de la matrice, les nappes C3 et C7 sont reliées entre elles et alimentées électriquement (en courant i) en bas à droite de la matrice, les nappes C4 et C8 sont reliées entre elles et alimentées électriquement (en courant i) en bas à droite de la matrice.

Ainsi, pour acquérir les signaux de détection de chacune des bobines réceptrices, il convient de procéder aux émissions/réceptions suivantes :
- alimenter, en haut à gauche de la matrice, la première bobine émettrice constituée des nappes conductrices C1 et C5 reliées entre elles et acquérir les signaux sur les sorties R1, R3, R5, R7, R1', R3', R5' et R7' pour avoir les réponses des bobines réceptrices 28_{1,1}, 28_{2,1}, 28_{3,1}, 28_{4,1}, 28_{1,5}, 28_{2,5}, 28_{3,5} et 28_{4,5},
- alimenter, en haut à gauche de la matrice, la deuxième bobine émettrice constituée des nappes conductrices C2 et C6 reliées entre elles et acquérir les signaux sur les sorties R2, R4, R6, R8, R2', R4', R6' et R8' pour avoir les réponses des bobines réceptrices 28₁,₂, 28_{2,2}, 28_{3,2}, 28_{4,2}, 28_{1,6}, 28_{2,6}, 28_{3,6} et 28_{4,6},
- alimenter, en bas à droite de la matrice, la troisième bobine émettrice constituée des nappes conductrices C3 et C7 reliées entre elles et acquérir les signaux sur les sorties R1, R3, R5, R7, R1', R3', R5' et R7' pour avoir les réponses des bobines réceptrices 28_{1,3}, 28_{2,3}, 28_{3,3}, 28_{4,3}, 28_{1,7}, 28_{2,7}, 28_{3,7} et 28_{4,7}, et
- alimenter, en bas à droite de la matrice, la quatrième bobine émettrice constituée des nappes conductrices C4 et C8 reliées entre elles et acquérir les signaux sur les sorties R2, R4, R6, R8, R2', R4', R6' et R8' pour avoir les réponses des bobines réceptrices 28_{1,4}, 28_{2,4}, 28_{3,4}, 28_{4,4}, 28_{1,8}, 28_{2,8}, 28_{3,8} et 28_{4,8}.

Compte tenu du fait que deux nappes conductrices reliées entre elles sont parcourues par un courant de même intensité mais de sens contraires, cela peut être compensé en jouant sur le sens d'enroulement des bobines réceptrices.

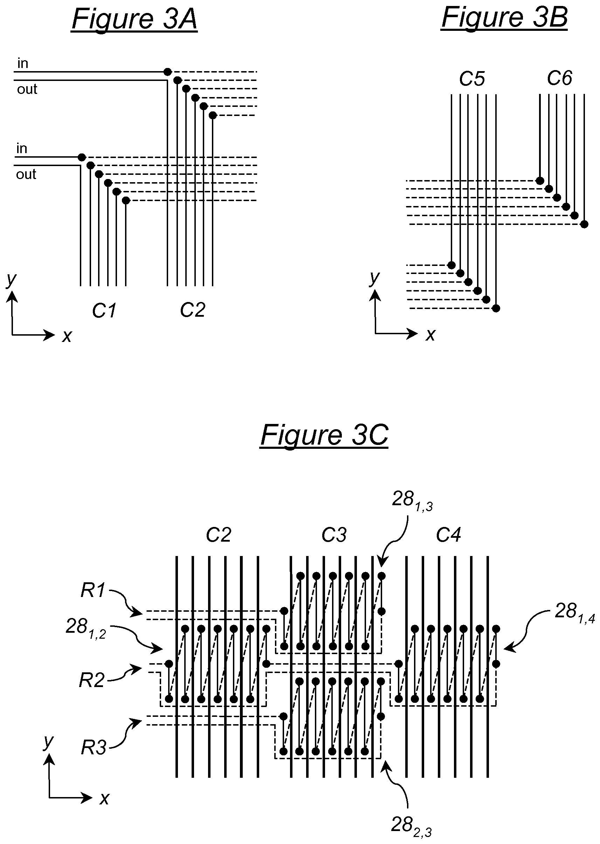

En ce qui concerne le raccordement précis des nappes conductrices entre elles, le détail A de la figure 2 est illustré précisément sur la figure 3A et le détail B de la figure 2 est illustré précisément sur la figure 3B. Ces détails montrent que chaque bobine émettrice constituée de deux nappes conductrices reliées entre elles comporte des spires rectangulaires réparties sur deux couches du support 16. Les portions de spires selon l'axe y constituant les nappes conductrices (C1 et C2 sur la figure 3A, C5 et C6 sur la figure 3B), représentées en traits pleins, sont disposées sur une première couche du support 16 tandis que les portions de spires selon l'axe x de raccordement entre nappes conductrices, représentées en traits interrompus, sont disposées sur une deuxième couche du support 16. La liaison entre les portions de spires de la première couche et celles de la deuxième couche se fait par des vias traversants illustrés par des points noirs sur les figures 3A et 3B. L'alimentation en courant de chaque bobine émettrice se fait par une connexion « in » d'arrivée du courant i et une connexion « out » de sortie du courant i. Dans la topologie des figures 3A et 3B, il a été choisi de connecter l'une des portions de spire de chaque nappe conductrice C5 et C6 à l'arrivée « in » et l'une des portions de spire de chaque nappe conductrice C1 et C2 à la sortie « out ».

En ce qui concerne le raccordement précis des bobines réceptrices entre elles, le détail C de la figure 2 est précisément illustré sur la figure 3C. Il illustre en particulier les bobines réceptrices 28₁,₂, 28_{1,3}, 28_{1,4} et 28_{2,3}. Ces bobines réceptrices sont constituées de spires de forme rectangulaire et disposées dans l'épaisseur du support 16. Pour chaque spire rectangulaire, une première portion représentée en trait plein fin est disposée sur la première couche précitée du support 16, une deuxième portion représentée en trait interrompu fin est disposée sur la deuxième couche précitée du support et deux autres portions raccordant les première et deuxième portions sont constituées de vias traversants entre les deux couches, ces vias traversants étant illustrés par des points noirs.

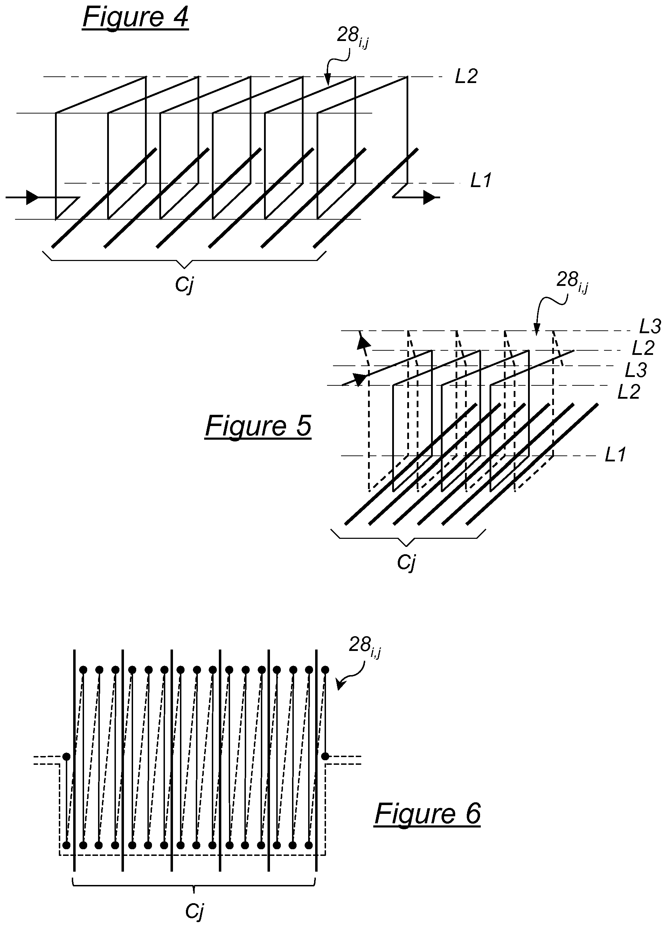

L'entrelacement des spires des bobines réceptrices entre les fils conducteurs des nappes conductrices est illustré par représentation sur la figure 3C, en traits pleins épais, des nappes conductrices C2, C3 et C4 disposées sur la première couche du support 16 avec les premières portions de spires des bobines réceptrices. La disposition relative entre une bobine réceptrice 28_{i,j} de la figure 3C et les fils conducteurs de la portion de nappe conductrice correspondante Cj est plus clairement illustrée en perspective sur la figure 4.

On note donc que conformément à l'implémentation illustrée par les figures 3C et 4 de la matrice d'éléments d'émission/réception 20, celle-ci ne nécessite que deux couches L1 et L2 reliées entre elles par des vias traversants. Le support 16 peut donc être concrètement réalisé en kapton (marque déposée) à deux couches de cuivre. On note également que les bobines réceptrices 28_{1,3}, 28_{1,4} et 28_{2,3} sont en terminaison de ligne pour les raccordements aux sorties R1, R2 et R3 de sorte qu'un fil conducteur de retour aux sorties R1, R2 et R3 est prévu dans la deuxième couche du support 16. En revanche, aucun fil de retour n'est prévu pour la bobine réceptrice 28_{1,2}, celle-ci n'étant pas en bout de ligne et étant connectée en série à la bobine réceptrice 28_{1,4}.

En variante et comme illustré en perspective sur la figure 5, le fil conducteur de retour d'une série de bobines réceptrices peut être utilisé pour former des spires supplémentaires de ces bobines réceptrices s'entrelaçant également avec les fils conducteurs des nappes conductrices. Dans ce cas, il est nécessaire de disposer de trois couches L1, L2 et L3 de support 16 pour que les spires du trajet retour ne soient pas en contact avec les spires du trajet aller dans une bobine réceptrice 28_{i,j}. Cela augmente la sensibilité de l'élément d'émission/réception.

En variante également et comme illustré en vue de dessus sur la figure 6, l'entrelacement des spires d'une bobine réceptrice 28_{i,j} avec les fils conducteurs de la nappe conductrice correspondante Cj peut être conçu pour présenter plusieurs spires, ici trois, entre chaque fil conducteur de la nappe conductrice. Cela augmente également la sensibilité de l'élément d'émission/réception.

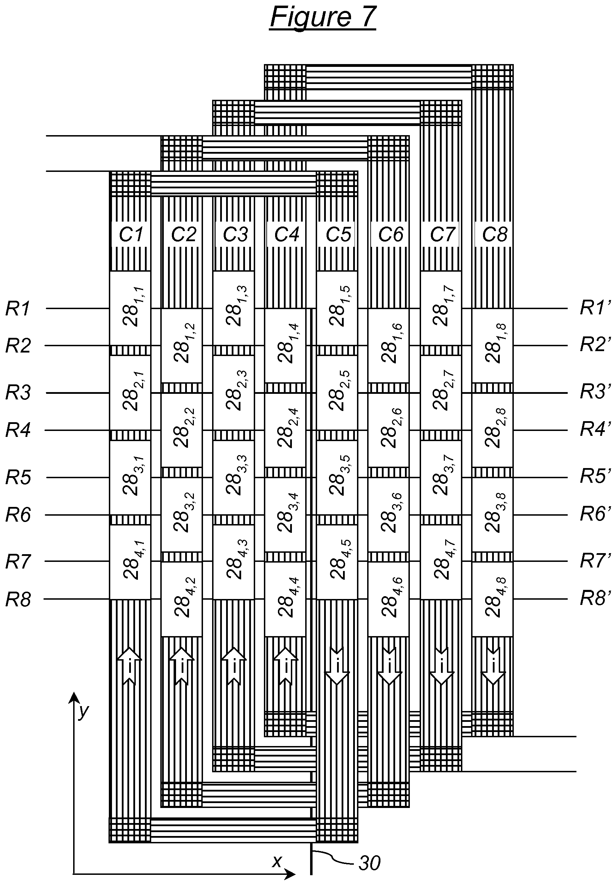

La figure 7 représente schématiquement une légère variante de réalisation de la tête de contrôle de la figure 2. Cette variante de réalisation consiste à prévoir une masse électrique 30 s'étendant entre les quatrième C4 et cinquième C5 nappes conductrices. A cette masse électrique 30 sont raccordées toutes les séries de bobines réceptrices raccordées aux sorties R1 à R8 et R1' à R8'. Cette variante de réalisation présente l'avantage de sa simplicité en termes de connexions électriques puisqu'aucun fil de retour n'est nécessaire. En revanche, les performances du capteur de contrôle sont sensiblement dégradées parce que cette simplification se fait au prix d'une mesure de composante normale du champ électromagnétique induit.

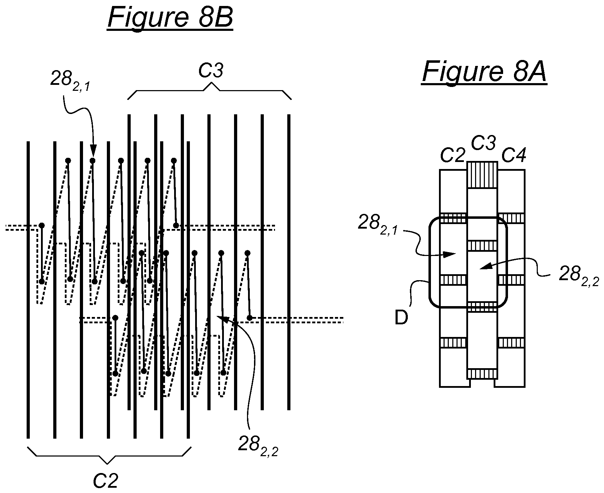

Les figures 8A et 8B illustrent une variante de réalisation selon laquelle les nappes conductrices C1 à C8 se recouvrent partiellement de sorte que les bobines réceptrices disposées en quinconce d'une nappe conductrice à l'autre se recouvrent également partiellement. Dans cette configuration, la densité des éléments d'émission/réception est augmentée et il n'y a plus aucune zone d'ombre comme le montre la figure 8A sur laquelle sont illustrées partiellement à titre d'exemple les nappes conductrices C2, C3 et C4 et certaines de leurs bobines réceptrices. Le détail D entoure en particulier les zones occupées par les bobines réceptrices 28_{2,1} et 28_{2,2}. La figure 8B représente schématiquement, pour le détail D, la disposition relative possible des fils conducteurs de nappes et des spires de bobines réceptrices ainsi que des fils de retour de lignes permettant de ne nécessiter que deux couches de support 16 pour réaliser cette configuration.

Il apparaît clairement qu'un capteur de contrôle non destructif par courants de Foucault tel que celui décrit précédemment permet, grâce à la configuration particulière de ses éléments d'émission/réception leur assurant une surface utile élevée, une inspection statique de structures bidimensionnelles sans zone d'ombre. Il est possible d'y détecter tous les défauts éventuels d'orientation donnée et de longueur supérieure à une longueur donnée dans la surface couverte par la tête de contrôle, et ce, quelle que soit la position de ces défauts par rapport aux éléments d'émission/réception. En outre, la disposition matricielle identique des éléments d'émission/réception assure un entrefer constant et donc une sensibilité identique de la tête de contrôle sur toute sa surface d'inspection quel que soit l'emplacement d'un défaut.

On notera par ailleurs que l'invention n'est pas limitée aux modes de réalisation décrits précédemment.

En s'inspirant par exemple de l'enseignement des documents précités, en particulier des documents de brevets FR 2 904 693 B1 et US 5,659,248, on peut augmenter la densité des éléments d'émission/réception pour réduire la longueur minimale des défauts pouvant être détectés, en utilisant un support à quatre couches ou plus. En particulier, il est possible de disposer à angle droit deux matrices d'éléments telles que celle illustrée sur la figure 2 sur au moins quatre couches de support de manière à pouvoir détecter tous les défauts possibles quelle que soit leur orientation.

En variante également, il est possible de placer des noyaux en ferrite pour augmenter la sensibilité des éléments d'émission/réception. Disposés en surface externe des éléments et en feuilles planes, ils permettent d'empêcher le rayonnement de champ électromagnétique dans l'air, de diminuer la réluctance du circuit d'émission/réception et par suite d'augmenter les courants induits dans la structure conductrice à inspecter. Disposés dans l'épaisseur des bobines réceptrices, ils permettent de réduire leur réluctance et d'augmenter la sensibilité du capteur.

En variante également, les récepteurs électromagnétiques des éléments d'émission/réception ont été envisagés sous la forme de bobines réceptrices dans les modes de réalisation décrits précédemment, mais ces bobines réceptrices pourraient être plus généralement remplacées par d'autres récepteurs électromagnétiques, parmi lesquels des récepteurs de type GMR (de l'anglais « Giant MagnetoResistance ») par exemple. Il suffit que ces récepteurs électromagnétiques soient disposés en vis-à-vis des nappes conductrices selon l'axe z et de manière à présenter un axe de détection électromagnétique selon l'axe x pour convenir dans une tête de contrôle selon l'invention. Les récepteurs GMR ne comportent pas de spires. Ils peuvent être déposés en surface selon un empilement de couches nanométriques de matériaux électromagnétiques, indifféremment au-dessus ou en dessous des nappes conductrices. La présence de champs électromagnétiques locaux engendrés par la circulation de courants inducteurs dans les nappes conductrices produit, dans ces récepteurs GMR, des variations de résistances détectables sous forme de variations de tensions lorsqu'un courant y circule. Il est donc très simple d'adapter les modes de réalisation précédemment détaillés en remplaçant les bobines réceptrices par de tels récepteurs GMR.

Il apparaîtra plus généralement à l'homme de l'art que diverses modifications peuvent être apportées aux modes de réalisation décrits ci-dessus, à la lumière de l'enseignement qui vient de lui être divulgué.

## Revendications

1. Tête de contrôle (10) d'un capteur de contrôle non destructif par courants de Foucault à fonctions séparées d'émission et réception comportant un support (16) sur lequel est disposé au moins un élément d'émission/réception (20), chaque élément d'émission/réception (20) comportant :
- un circuit (26) émetteur d'un champ électromagnétique local par circulation d'un courant alternatif prédéterminé (i) dans ce circuit (26), et
- un récepteur électromagnétique (28) présentant un axe de détection électromagnétique (x) sensible au champ électromagnétique localement émis,
dans laquelle :
- le circuit émetteur (26) est une portion de nappe conductrice s'étendant sur une couche du support (16) selon une direction principale prédéterminée (y) de circulation du courant alternatif (i), et
- le récepteur électromagnétique (28) est disposé :
• en vis-à-vis du circuit émetteur (26) par rapport à un axe (z) normal à la couche du support (16) sur laquelle s'étend cette portion de nappe (26), et
• de sorte que son axe de détection électromagnétique (x) soit orthogonal à cet axe normal (z) et orthogonal à la direction principale prédéterminée (y) de circulation du courant alternatif (i) dans la portion de nappe conductrice (26),
**caractérisée en ce que** chaque portion de nappe formant circuit émetteur (26) est de surface rectangulaire de même largeur, orthogonalement à la direction principale prédéterminée (y), que la nappe conductrice qui la comporte et la projection normale de chaque récepteur électromagnétique (28) sur la portion de nappe en vis-à-vis de laquelle il est disposé correspond à cette surface rectangulaire et notamment à cette largeur.

2. Tête de contrôle (10) selon la revendication 1, comportant plusieurs éléments d'émission/réception (20) disposés côte à côte selon au moins une direction principale du support (16).

3. Tête de contrôle (10) selon la revendication 2, dans laquelle les éléments d'émission/réception (20) sont disposés en matrice selon deux directions principales (x, y), la première (y) des deux directions principales correspondant à celle de circulation du courant (i) dans chaque portion de nappe (26) et les éléments d'émission/réception (20) étant alignés selon cette première direction (y) de manière à former plusieurs colonnes (C1, C2, C3, C4, C5, C6, C7, C8) de la matrice, la deuxième (x) des deux directions principales correspondant à celle de l'axe de détection électromagnétique de chaque récepteur électromagnétique (28) et les éléments d'émission/réception (20) étant disposés en quinconce selon cette deuxième direction (x) de manière à former plusieurs lignes de la matrice.

4. Tête de contrôle (10) selon la revendication 3, dans laquelle les portions de nappes (26) d'une même colonne de la matrice d'éléments d'émission/réception (20) sont reliées en série entre elles de manière à ne former qu'une seule nappe conductrice formant une colonne matricielle (C1, C2, C3, C4, C5, C6, C7, C8) en vis-à-vis de laquelle sont disposées plusieurs récepteurs électromagnétiques (28_{1,1}-28_{4,1}, 28_{1,2}-28_{4,2}, 28_{1,3}-28_{4,3}, 28_{1,4}-28_{4,4}, 28_{1,5}-28_{4,5}, 28_{1,6}-28_{4,6}, 28_{1,7}-28_{4,7}, 28_{1,8}-28_{4,8}).

5. Tête de contrôle (10) selon l'une quelconque des revendications 1 à 4, dans laquelle la portion de nappe (26) de chaque élément d'émission/réception (20) est constituée de plusieurs fils conducteurs d'un même courant (i) disposés en parallèle selon la direction principale prédéterminée (y) de circulation de ce courant.

6. Tête de contrôle (10) selon les revendications 4 et 5, dans laquelle les nappes conductrices formant colonnes matricielles (C1, C2, C3, C4, C5, C6, C7, C8) sont reliées deux à deux en bobines émettrices dont les spires comportent les fils conducteurs de ces nappes conductrices, deux nappes conductrices reliées entre elles étant espacées d'au moins une autre nappe conductrice.

7. Tête de contrôle (10) selon la revendication 5 ou 6, dans laquelle le récepteur électromagnétique (28) de chaque élément d'émission/réception (20) est une bobine à spires de forme rectangulaire entrelacées entre les fils conducteurs de la portion de nappe conductrice (26) en vis-à-vis de laquelle elle est disposée.

8. Tête de contrôle (10) selon l'une quelconque des revendications 1 à 7, dans laquelle le support (16) comporte plusieurs couches (L1, L2 ; L1, L2, L3) de film souple de polyimide.

9. Capteur de contrôle non destructif par courants de Foucault comportant :
- une tête de contrôle (10) à au moins un élément d'émission/réception (20) selon l'une quelconque des revendications 1 à 8,
- un module de traitement (12) à modulation/démodulation de données à destination et en provenance de la tête de contrôle (10), et
- un connecteur (14), disposé sur le support (16) de la tête de contrôle (10), reliant électriquement des pistes de connexions (18) du support (16) au module de traitement (12), les pistes de connexions (18) étant reliées électriquement audit au moins un élément d'émission/réception (20).

## Patentansprüche

1. Prüfkopf (10) eines zerstörungsfreien Wirbelstromprüfsensors mit getrennter Sende- und Empfangsfunktion, umfassend einen Träger (16), auf dem mindestens ein Sende-/Empfangselement (20) angeordnet ist, wobei jedes Sende-/Empfangselement (20) umfasst:
- eine Sendeschaltung (26) eines lokalen elektromagnetischen Feldes durch Fließen eines vorbestimmten Wechselstroms (i) in dieser Schaltung (26), und
- einen elektromagnetischen Empfänger (28), der eine elektromagnetische Detektionsachse (x) aufweist, die für das lokal abgestrahlte elektromagnetische Feld empfindlich ist,
wobei:
- die Sendeschaltung (26) ein Leiterlagenabschnitt ist, der sich auf einer Schicht des Trägers (16) in einer vorbestimmten Hauptfließrichtung (y) des Wechselstroms (i) erstreckt, und
- der elektromagnetische Empfänger (28) angeordnet ist:
• der Sendeschaltung (26) in Bezug auf eine Achse (z) gegenüberliegend, welche zu der Schicht des Trägers (16), auf der sich dieser Lagenabschnitt (26) erstreckt, normal ist, und
• so, dass seine elektromagnetische Detektionsachse (x) zu dieser normalen Achse (z) orthogonal und zur vorbestimmten Hauptfließrichtung (y) des Wechselstroms (i) im Leiterlagenabschnitt (26) orthogonal ist,
**dadurch gekennzeichnet, dass** jeder Lagenabschnitt, der eine Sendeschaltung (26) bildet, von rechteckiger Fläche gleicher Breite orthogonal zur vorbestimmten Hauptrichtung (y) ist, dass die Leiterlage, die denselben umfasst, und die normale Projektion jedes elektromagnetischen Empfängers (28) auf dem Lagenabschnitt, dem gegenüber er angeordnet ist, dieser rechteckigen Fläche und insbesondere dieser Breite entspricht.

2. Prüfkopf (10) nach Anspruch 1, der mehrere Sende-/Empfangselemente (20) umfasst, die in mindestens einer Hauptrichtung des Trägers (16) nebeneinander angeordnet sind.

3. Prüfkopf (10) nach Anspruch 2, wobei die Sende-/Empfangselemente (20) als Matrix in zwei Hauptrichtungen (x, y) angeordnet sind, wobei die erste (y) der zwei Hauptrichtungen derjenigen des Fließens des Stroms (i) in jedem Lagenabschnitt (26) entspricht, und wobei die Sende-/Empfangselemente (20) in dieser ersten Richtung (y) derart ausgerichtet sind, dass sie mehrere Spalten (C1, C2, C3, C4, C5, C6, C7, C8) der Matrix bilden, wobei die zweite (x) der zwei Hauptrichtungen derjenigen der elektromagnetischen Detektionsachse jedes elektromagnetischen Empfängers (28) entspricht, und wobei die Sende-/Empfangselemente (20) in dieser zweiten Richtung (x) derart versetzt angeordnet sind, das sie mehrere Zeilen der Matrix bilden.

4. Prüfkopf (10) nach Anspruch 3, wobei die Lagenabschnitte (26) ein und derselben Spalte der Sende-/Empfangselemente- (20) Matrix derart miteinander in Reihe geschaltet sind, dass sie eine nur einzige Leiterlage bilden, die eine Matrixspalte (C1, C2, C3, C4, C5, C6, C7, C8) bildet, der gegenüber mehrere elektromagnetische Empfänger (28_{1,1}-28_{4,1}, 28_{1,2}-28_{4,2}, 28_{1,3}-28_{4,3}, 28_{1,4}-28_{4,4}, 28_{1,5}-28_{4,5}, 28_{1,6}-28_{4,6}, 28_{1,7}-28_{4,7}, 28_{1,8}-28_{4,8}) angeordnet sind.

5. Prüfkopf (10) nach einem der Ansprüche 1 bis 4, wobei der Lagenabschnitt (26) jedes Sende-/Empfangselements (20) aus mehreren Leiterdrähten ein und desselben Stroms (i) besteht, die in der vorbestimmten Hauptfließrichtung (y) dieses Stroms parallel angeordnet sind.

6. Prüfkopf (10) nach den Ansprüchen 4 und 5, wobei die Leiterlagen, die Matrixspalten (C1, C2, C3, C4, C5, C6, C7, C8) bilden, zweierweise zu Sendespulen verbunden sind, deren Windungen die Leiterdrähte dieser Leiterlagen umfassen, wobei zwei miteinander verbundene Leiterlagen um mindestens eine weitere Leiterlage beabstandet sind.

7. Prüfkopf (10) nach Anspruch 5 oder 6, wobei der elektromagnetische Empfänger (28) jedes Sende-/Empfangselements (20) eine Spule mit Windungen von rechteckiger Form ist, die zwischen den Leiterdrähten des Leiterlageabschnitts (26), dem gegenüber sie angeordnet ist, verschachtelt sind.

8. Prüfkopf (10) nach einem der Ansprüche 1 bis 7, wobei der Träger (16) mehrere flexible Polyimidfilmschichten (L1, L2; L1, L2, L3) umfasst.

9. Zerstörungsfreier Wirbelstromprüfsensor, umfassend:
- einen Prüfkopf (10) mit mindestens einem Sende-/Empfangselement (20) nach einem der Ansprüche 1 bis 8,
- ein Verarbeitungsmodul (12) mit Modulation/Demodulation von Daten für und vom Prüfkopf (10), und
- einen auf dem Träger (16) des Prüfkopfs (10) angeordneten Anschluss (14), der Anschlussbahnen (18) des Trägers (16) elektrisch mit dem Verarbeitungsmodul (12) verbindet, wobei die Anschlussbahnen (18) elektrisch mit dem mindestens einen Sende-/Empfangselement (20) verbunden sind.

## Claims

1. Inspection head (10) of an eddy current non-destructive testing sensor with separate transmitting and receiving functions comprising a support (16) whereon is arranged at least one transmitting/receiving element (20), with each transmitting/receiving element (20) comprising:
- a circuit (26) transmitting a local electromagnetic field by circulating a predefined alternating current (i) in this circuit (26), and
- an electromagnetic receiver (28) that has an electromagnetic detection axis (x) sensitive to the locally transmitted electromagnetic field,
wherein:
- the transmitting circuit (26) is a portion of conductive sheet extending over a layer of the support (16) in a predefined main direction (y) of flow of the alternating current (i), and
- the electromagnetic receiver (28) is arranged:
• opposite the transmitting circuit (26) relative to an axis (z) normal to the layer of the support (16) on which said portion of sheet (26) extends, and
• in such a way that its electromagnetic detection axis (x) is orthogonal to this normal axis (z) and orthogonal to the predefined main direction (y) of flow of the alternating current (i) in the portion of conductive sheet (26),
**characterized in that** each portion of sheet forming a transmitting circuit (26) is of rectangular surface with same width, orthogonally to the predefined main direction (y), than the conductive sheet that comprises it, and the normal projection of each electromagnetic receiver (28) on the portion of sheet opposite which it is arranged corresponds to this rectangular surface and especially to this width.

2. Inspection head (10) according to claim 1, comprising several transmitting/receiving elements (20) arranged side by side in at least one main direction of the support (16).

3. Inspection head (10) according to claim 2, wherein the transmitting/receiving elements (20) are arranged in a matrix in two main directions (x, y), with the first (y) of the two main directions corresponding to that of the flow of the current (i) in each portion of sheet (26) and the transmitting/receiving elements (20) being aligned in this first direction (y) in such a way as to form several columns (C1, C2, C3, C4, C5, C6, C7, C8) of the matrix, with the second (x) of the two main directions corresponding to that of the electromagnetic detection axis of each electromagnetic receiver (28) and the transmitting/receiving elements (20) being arranged in staggered fashion in this second direction (x) in such a way as to form several lines of the matrix.

4. Inspection head (10) according to claim 3, wherein the portions of sheets (26) of the same column of the matrix of transmitting/receiving elements (20) are connected in series between them in such a way as to form a single conductive sheet that forms a matrix column (C1, C2, C3, C4, C5, C6, C7, C8) opposite which are arranged several electromagnetic receivers (28_{1,1}-28_{4,1}, 28_{1,2}-28_{4,2}, 28_{1,3}-28_{4,3}, 28_{1,4}-28_{4,4}, 28_{1,5}-28_{4,5}, 28_{1,6}-28_{4,6}, 28_{1,7}-28_{4,7}, 28_{1,8}-28_{4,8}).

5. Inspection head (10) according to any of claims 1 to 4, wherein the portion of sheet (26) of each transmitting/receiving element (20) is comprised of several conductor wires with the same current (i) arranged in parallel in the predefined main direction (y) of flow of this current.

6. Inspection head (10) according to claims 4 and 5, wherein the conductive sheets forming matrix columns (C1, C2, C3, C4, C5, C6, C7, C8) are connected two by two as transmitting coils of which the spires comprise the conductor wires of these conductive sheets, with two conductive sheets connected together being spaced by at least one other conductive sheet.

7. Inspection head (10) according to claim 5 or 6, wherein the electromagnetic receiver (28) of each transmitting/receiving element (20) is a coil with spires of rectangular shape interlaced between the conductor wires of the portion of conductive sheet (26) opposite which it is arranged.

8. Inspection head (10) according to any of claims 1 to 7, wherein the support (16) comprises several layers (L1, L2; L1, L2, L3) of polyimide flexible film.

9. Eddy current non-destructive testing sensor comprising:
- an inspection head (10) with at least one transmitting/receiving element (20) according to any of claims 1 to 8,
- a modulation/demodulation module for processing (12) data intended for and coming from the inspection head (10), and
- a connector (14), arranged on the support (16) of the inspection head (10), electrically connecting connection pathways (18) from the support (16) to the processing module (12), with the connection pathways (18) being electrically connected to said at least one transmitting/receiving element (20).
